# EUROPÄISCHE PATENTSCHRIFT

(11) **EP 1 775 168 B1**
(45) Veröffentlichungstag und Bekanntmachung des Hinweises auf die Patenterteilung: **20.08.2008**
(21) Anmeldenummer: 06019950.2
(22) Anmeldetag: 23.09.2006
(51) Int. Cl.: B60R 13/07, B60R 13/08, B60J 10/00

(54) **Wasserablaufschlauch**
Water drainage pipe
Tuyau de drainage d'eau

(30) Priorität: 11.10.2005 DE 102005048563
(43) Veröffentlichungstag der Anmeldung: 18.04.2007
(73) Patentinhaber: Bayerische Motoren Werke Aktiengesellschaft, 80809 München (DE)
(72) Erfinder: Elsen, Frank, 82538 Geretsried (DE); Hogger, Thomas, Greenville, South Carolina 29615 (US)

(56) Entgegenhaltungen:
- DE-A1- 3 215 195
- DE-A1- 4 103 781
- DE-A1- 10 348 355
- DE-A1- 19 808 898

## Beschreibung

Die Erfindung betrifft einen Wasserablaufschlauch insbesondere zur Entwässerung eines Schiebedachs eines Kraftfahrzeugs nach dem Oberbegriff des Patentanspruchs 1.

Aus der DE 32 15 195 A1 ist ein Wasserablaufschlauch für Kraftfahrzeuge bekannt, dessen Öffnung am Ende von zwei auseinander liegenden, unter dem hydrostatischen Druck der Wassersäule selbsttätig öffnenden Schließlippen gebildet wird. Die Schließlippen liegen aneinander an und verschließen die untere Öffnung normalerweise luftdicht.

Die DE 4103 781 A1 zeigt ebenfalls einen Wasserablaufschlauch.

Dieses Dokument offenbart den Oberbegriff des Anspruchs 1.

Aufgabe der Erfindung ist es, einen Wasserablaufschlauch insbesondere zur Entwässerung eines Schiebedachs eines Kraftfahrzeugs zu schaffen, in dem während der Fahrt des Kraftfahrzeugs keine Gluckergeräusche entstehen.

Diese Aufgabe wird mit einem Wasserablaufschlauch mit den Merkmalen des Patentanspruchs 1 gelöst.

Der Wasserablaufschlauch besteht zumindest im Bereich des Schlauchendes aus einem dünnen elastischen Material und läuft in Form eines schnabelförmigen Mundstücks aus, das ohne Krafteinwirkung eine schmale Öffnung bildet. Bereits bei einem geringen Unterdruck im Wasserablaufschlauch verformt sich das Mundstück elastisch, sodass die Öffnung verschlossen ist. Schnabelförmige Mundstücke sind beispielsweise bekannt von Musikinstrumenten und von Trinkhilfen für Kleinkinder. Ein solches Mundstück kann beispielsweise erzeugt werden, in dem ein Schlauchende soweit zusammengedrückt wird, bis nur mehr eine schmale Öffnung vorhanden ist.

Zur Vermeidung von Gluckergeräuschen im Wasserablaufschlauch ist es wesentlich, dass keine Luft durch das Mundstück in den Wasserablaufschlauch eintreten kann, wenn ein Unterdruck im Wasserablaufschlauch entsteht. Deshalb besteht das Mundstück aus dem dünnen elastischen Material, sodass es sich bereits bei einem sehr geringen Unterdruck verschließt, der erfindungsgemäß durch den Fahrtwind entsteht.

Die aus der DE 32 15 195 A1 bekannten Schließlippen verfolgen ein ähnliches Ziel. Allerdings sind diese Schließlippen normalerweise geschlossen. Zum Öffnen der Schließlippen ist somit eine Wassersäule notwendig. Dies setzt voraus, dass kein Gegendruck herrscht und die Schließlippen den tiefsten Punkt bilden. Bei dem erfindungsgemäßen Wasserablaufschlauch muss das Mundstück nicht unbedingt den tiefsten Punkt bilden, ein Ablauf von Wasser durch den Schlauch ist trotzdem gewährleistet, da das Mundstück normalerweise leicht geöffnet ist. Somit kann der erfindungsgemäße Wasserablaufschlauch mit wesentlich weniger zu beachtenden Randparametern verbaut werden. Zwar heißt es in der Beschreibungseinleitung der DE 32 15 195 A1, dass "der weitaus größte Teil dieser ... Schläuche am Ende bereits im Normalzustand geöffnet" sind, weil die Schließlippen nicht aneinander anliegen, aber daraus kann nicht gefolgert werden, dass diese "defekten" Schließlippen nun bei einem Unterdruck im Wasserablaufschlauch diesen verschließen.

Bevorzugt weist die schmale Öffnung des Mundstücks einen S-förmigen Verlauf auf. Der S-förmige Verlauf erhöht die Funktionssicherheit, sodass mit sehr hoher Wahrscheinlichkeit das Mundstück sich bei einem Unterdruck im Wasserablaufschlauch vollständig schließt und so die unerwünschten Gluckergeräusche vermeidet.

Das dünne elastische Material des Endbereichs des Wasserablaufschlauchs ist günstigerweise an einen weniger elastischen Schlauch angespritzt. Um die Kosten für den gesamten Wasserablaufschlauch so gering wie möglich zu halten, besteht nur der Endbereich des Wasserablaufschlauchs aus einem gegossenen Endstück, während der restliche Wasserablaufschlauch aus einem billigen endlos hergestellten Schlauch besteht. Das Endstück kann am restlichen Wasserablaufschlauch angespritzt sein. Durch die erfindungsgemäße Gestaltung ist nur eine geringe Öffnung des Mundstücks zur Entformung des Kerns notwendig. Somit lässt sich der Wasserablaufschlauch kostengünstiger herstellen als ein Wasserablaufschlauch, an dessen Ende ein separates Ventil befestigt ist.

Weitere vorteilhafte Ausgestaltungen sind Gegenstand von Unteransprüchen.

In der Zeichnung ist ein Ausführungsbeispiel der Erfindung dargestellt, anhand dessen die Erfindung im folgenden näher beschrieben wird. Die einzelnen Figuren zeigen in schematischer Darstellungsweise:
- Fig. 1: eine perspektivische Ansicht eines Endes eines Wasserablaufschlauches und
- Fig. 2: einen Längsschnitt durch das in Fig. 1 gezeigte Ende des Wasserablaufschlauches.

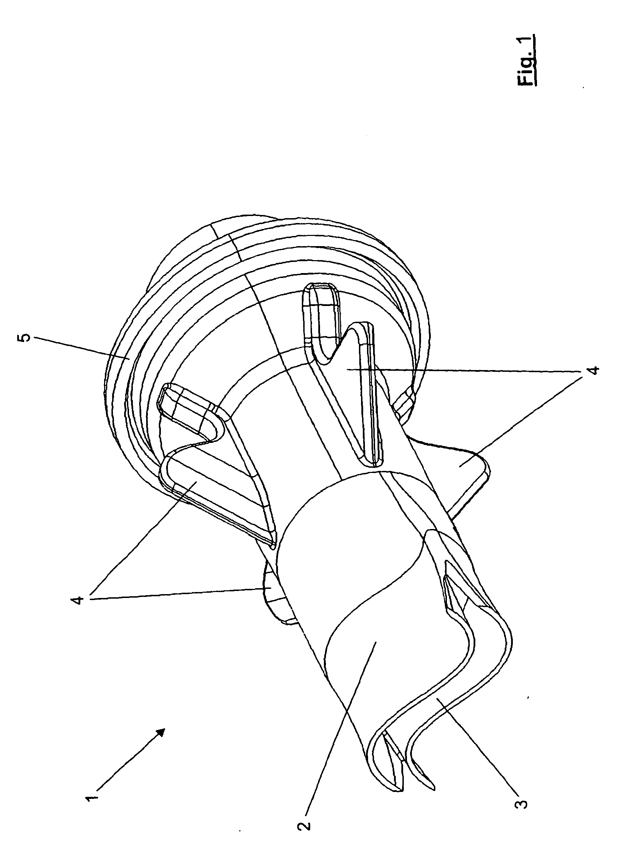

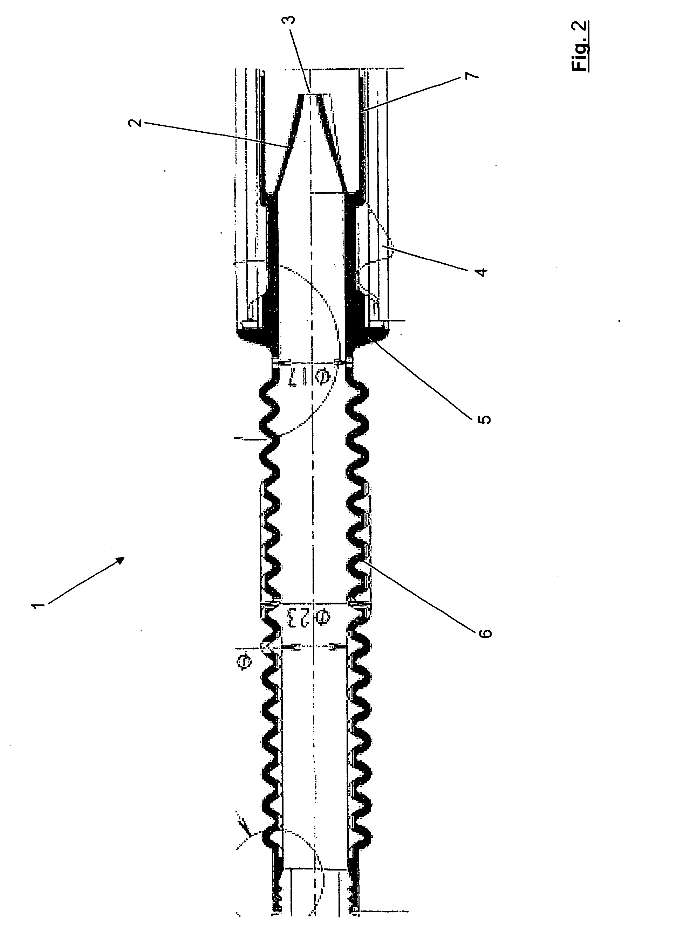

In Fig. 1 und Fig. 2 ist das untere Ende eines Wasserablaufschlauchs 1 zur Entwässerung eines Schiebedachs in einem Kraftfahrzeug dargestellt. Das obere Ende des Wasserablaufschlauchs 1 ist am Schiebedach befestigt. Durch den Wasserablaufschlauch 1 wird Wasser, das sich eventuell im Schiebedach ansammelt, zur Fahrzeugunterseite hin abgeführt. Das dargestellte untere Ende des Wasserablaufschlauchs 1 besteht aus einem schnabelförmigen Mundstück 2, das eine schmale Öffnung 3 mit einem S-förmigen Verlauf bildet. Im Bereich des schnabelförmigen Mundstücks 2 sind die Wandstärken des Wasserablaufschlauchs 1 besonders dünn. An der äußeren Mantelfläche des Wasserablaufschlauchs 1 befinden sich kurz hinter dem Mundstück 2 gleichmäßig über den Umfang verteilt vier Rastnasen 4. Vom Mundstück 2 aus gesehen hinter den Rastnasen 4 befindet sich an der äußeren Mantelfläche des Wasserablaufschlauchs 1 ein umlaufender Kragen 5. Die Wandung des Schlauchabschnitts 6 hinter dem Kragen 5 weist im Längsschnitt gesehen einen wellenförmigen Verlauf auf, sodass dieser Schlauchabschnitt 6 wie eine Ziehharmonika in seiner Länge veränderbar ist und leicht gekrümmt werden kann. Zusätzlich kann das Mundstück 2 - wie in Fig. 2 dargestellt - von einer Schutzhülle 7 umgeben sein, die das Mundstück 2 schützt.

Am Fahrzeug ragt das untere Ende des Wasserablaufschlauchs 1 unten aus einer Ausnehmung an der Innenseite eines Seitenschwellers im Bereich einer A-Säule der Fahrzeugkarosserie heraus. Dabei liegt der Kragen 5 von oben am Rand der Ausnehmung an, während die Rastnasen 4 den Rand der Ausnehmung von der anderen Seite hintergreifen. Auf diese Weise lässt sich das untere Ende des Wasserablaufschlauchs 1 schnell und einfach am Fahrzeug montieren. Das obere Ende des Wasserablaufschlauchs 1 ist auf ein Wasserablaufrohr des Schiebedachs aufgesteckt, das sich zwischen der Dachaußenhaut und dem Himmel zur Verkleidung des Fahrzeugdachs auf der Innenseite befindet. Der Abstand zwischen dem Wasserablaufrohr des Schiebedachs und der Ausnehmung kann aufgrund von Bauteiltoleranzen variieren. Diese Variation in der erforderlichen Länge des Wasserablaufschlauchs 1 wird kompensiert durch den Schlauchabschnitt 6 mit dem wellenförmigen Wandungsverlauf, sodass die Bauteiltoleranzen keinerlei negativen Auswirkungen haben.

Wenn sich nun Wasser im Schiebedach ansammelt, wird dieses durch den Wasserablaufschlauch 1 auf die Fahrzeugunterseite abgeleitet. Dabei läuft das Wasser aus der normalerweise leicht geöffneten Öffnung 3 des Mundstücks 2 heraus. Während der Fahrt kann insbesondere bei geöffnetem Schiebedach in dem Wasserablaufschlauch 1 ein Unterdruck am oberen Ende entstehen. Dieser Unterdruck könnte dazu führen, dass Umgebungsluft in den Wasserablaufschlauch 1 durch die Öffnung 3 hineingezogen wird. Dies würde zu Gluckergeräuschen im Wasserablaufschlauch 1 führen, wenn sich in dem Wasserablaufschlauch 1 Wasser befindet. Da aber das Mundstück 2 dünne Wände aus EPDM aufweist, verformt sich bei einem entstehenden Unterdruck das Mundstück 2 derart, dass sich die Öffnung 3 verschließt. Somit kann bei Unterdruck keine Luft mehr durch die Öffnung 3 in den Wasserablaufschlauch gelangen, sodass keine unerwünschten Gluckergeräusche entstehen können.

## Patentansprüche

1. Wasserablaufschlauch (1) zur Entwässerung eines Schiebedachs eines Kraftfahrzeugs auf die Fahrzeugunterseite, wobei der Wasserablaufschlauch (1) im Bereich eines Schlauchendes aus einem dünnen elastischen Material besteht und in Form eines schnabelförmigen Mundstücks (2) ausläuft, das ohne Krafteinwirkung eine schmale Öffnung (3) bildet, während bereits bei einem geringen Unterdruck im Wasserablaufschlauch (1) sich das Mundstück (2) elastisch verformt, sodass die Öffnung (3) verschlossen ist, **dadurch gekennzeichnet, dass** der erforderliche Unterdruck durch den Fahrtwind entsteht.

2. Wasserablaufschlauch (1) nach Anspruch 1, **dadurch gekennzeichnet, dass** die schmale Öffnung (3) des Mundstücks (2) einen S-förmigen Verlauf aufweist.

3. Wasserablaufschlauch (1) nach Anspruch 1 oder 2, **dadurch gekennzeichnet, dass** am Endbereich des Wasserablaufschlauchs (1) außen zumindest eine Nase (4) angebracht ist.

4. Wasserablaufschlauch (1) nach einem der vorhergehenden Ansprüche, **dadurch gekennzeichnet, dass** an den Endbereich sich ein Abschnitt (6) anschließt, dessen Wandung im Längsschnitt gesehen einen wellenförmigen Verlauf aufweist.

5. Wasserablaufschlauch (1) nach einem der vorhergehenden Ansprüche, **dadurch gekennzeichnet, dass** das elastische Material des Endbereichs des Wasserablaufschlauchs (1) an einen weniger elastischen Schlauch angespritzt ist.

6. Wasserablaufschlauch (1) nach einem der vorhergehenden Ansprüche, **dadurch gekennzeichnet, dass** das Mundstück (2) von einer Schutzhülle (7) umgeben ist.

## Claims

1. A water drainage pipe (1) for draining the water from a sliding roof of a motor vehicle on to the underside thereof, wherein the pipe (1) at one end is made of a thin elastic material and terminates in the form of a beak-like mouthpiece (2) which forms a narrow opening (3) if not subjected to force, whereas if there is even a slight negative pressure in the pipe (1) the mouthpiece (2) is elastically deformed so that the opening (3) is closed, **characterised in that** the required negative pressure is produced by the head wind.

2. A pipe (1) according to claim 1, **characterised in that** the narrow opening (3) of the mouthpiece (2) is S-shaped.

3. A pipe (1) according to claim 1 or claim 2, **characterised in that** the end region of the pipe (1) has at least one external lug (4).

4. A pipe (1) according to any of the preceding claims, **characterised in that** a portion (6) adjoining the end region has a wall which is corrugated in longitudinal section.

5. A pipe (1) according to any of the preceding claims, **characterised in that** the elastic material forming the end region of the water drainage pipe (1) is injected on to a less elastic pipe.

6. A pipe (1) according to any of the preceding claims, **characterised in that** the mouthpiece (2) is surrounded by a protective sheath (7).

## Revendications

1. Tuyau d'évacuation d'eau (1) pour retirer l'eau d'un toit coulissant d'un véhicule automobile et l'évacuer sur la face inférieure de celui-ci, ce tuyau (1) étant dans sa zone d'extrémité réalisé en un matériau élastique mince sous la forme d'une embouchure (2) en forme de bec qui, en l'absence de force, présente une ouverture (3) étroite, tandis que déjà sous l'action d'une dépression faible dans le tuyau d'évacuation (1) cette embouchure se déforme élastiquement en fermant l'ouverture (3), ce tuyau étant
**caractérisé en ce que**
la dépression nécessaire est produite par le vent de la vitesse.

2. Tuyau d'évacuation d'eau (1) selon la revendication 1,
**caractérisé en ce que**
l'ouverture étroite (3) de l'embouchure (2) a la forme d'un S.

3. Tuyau d'évacuation d'eau (1) selon la revendication 1 ou 2,
**caractérisé en ce que**
dans la zone d'extrémité du tuyau (1) se trouve à l'extérieur au moins une dent (4).

4. Tuyau d'évacuation d'eau (1) selon une des revendications précédentes,
**caractérisé en ce qu'**
à son extrémité fait suite une partie (6) dont la paroi, en coupe longitudinale, présente un tracé ondulé.

5. Tuyau d'évacuation d'eau (1) selon une des revendications précédentes,
**caractérisé en ce que**
le matériau élastique de la zone d'extrémité du tuyau d'évacuation d'eau (1) est injecté sur un tuyau moins élastique.

6. Tuyau d'évacuation d'eau (1) selon une des revendications précédentes,
**caractérisé en ce que**
l'embouchure (2) est entourée par un manchon de protection (7).
